# EUROPEAN PATENT SPECIFICATION

(11) **EP 2 216 736 B1**
(45) Date of publication and mention of the grant of the patent: **17.01.2018**
(21) Application number: 09158034.0
(22) Date of filing: 16.04.2009
(51) Int. Cl.: G06K 19/077, G06F 13/16

(54) **Data storage device and method for operating the same**
Datenspeicherungsvorrichtung und Betriebsverfahren dafür
Dispositif de stockage de données et son procédé de fonctionnement

(30) Priority: 05.02.2009 TW 98103669
(43) Date of publication of application: 11.08.2010
(73) Proprietor: HTC Corporation, Taoyuan City 330 (TW)
(72) Inventor: Huang, Hung-Yi, Taoyuan County 330 (TW); Chien, Chih-Ling, Taoyuan County 330 (TW)
(74) Representative: Becker Kurig Straus

(56) References cited:
- WO-A-2005/106781
- US-A1- 2003 074 179
- US-A1- 2003 221 066
- US-A1- 2006 081 716
- US-A1- 2008 235 406

## Description

### BACKGROUND OF THE INVENTION

### 1. Field of the Invention

The present application relates to a data storage device and a method for operating the same. More particularly, the present application relates to a data storage device having a data transmission function and a data storage function, and a method for operating the same.

### 2. Description of Related Art

With development of information technology, storage media manufactured by semiconductor technique gradually become mainstream products, which are generally referred to as potable memories, flash memory cards or memory cards. Compared to the conventional storage media such as a soft disk and a compact disk, characteristics such as easy carry, power saving, data storage, data transmission rate, re-readable/re-writable, shockproof, damp proof, etc. of the memory card are far more better than that of the conventional storage media. Since the memory card has such superior characteristics, various electronic product manufacturers of different nations actively enter this market and develop their lead memory cards such as smart cards, PCMCIA ATA flash cards (PC cards), compact flash cards (CF cards), smart media cards (SM cards), multimedia cards (MMC cards), memory stick cards (MS cards) and secure digital cards (SD cards), etc. for applying to various digital products.

When a user needs to transmit data stored in each of the aforementioned various memory cards to a personal computer, a transmission cable is generally applied for the data transmission. If the transmission cable is not applied, the data transmission between the memory card and the personal computer then cannot be performed.

US 2008/235406 discloses secure access to a database of upgrade data by storing an encryption key value in a cable used to interconnect a first device and a second device that is associated with the database of upgrade data. The second device allows access to the database of upgrade data via the cable only when the cable is first positively authenticated by the second device through use of the encryption key value stored in the cable.

WO 2005/106781 discloses re-programmable non-volatile memory cards including at least two sets of electrical contacts to which the internal memory is connected. The two sets of contacts have different patterns. The cards can thus be used with different hosts that are compatible with one set of contacts but not the other. A sleeve that is moveable by hand may be included to expose the set of contacts being used.

### SUMMARY OF THE INVENTION

The present invention is provided by appended claims 1 and 7. Beneficial embodiments are provided in the dependent claims. Accordingly, the present application is directed to a data storage device, which can be connected between two electronic devices for data storage and data transmission.

The present application is directed to a method for operating a data storage device, by which the data storage device connected between two electronic devices can be operated for data storage and data transmission.

The present application provides a data storage device comprising a main body and a storage element. The main body has a first connecting part and a second connecting part, suitable for being connected to a first electronic device and a second electronic device, respectively. The storage element is disposed at the main body and is electrically connected to the first connecting part and the second connecting part, wherein the data storage device is suitable for receiving data from the first electronic device, and the data is selected for being stored in the storage element, being transmitted to the second electronic device, or being both stored in the storage element and transmitted to the second electronic device.

The present application provides a method for operating a data storage device comprising a storage element. First, data is transmitted from a first electronic device to the data storage device. Next, the data is stored into the storage device, or is transmitted from the data storage device to a second electronic device, or the data is stored into the storage element and is transmitted from the data storage device to the second electronic device.

Accordingly, the data storage device of the present application can be connected between the first electronic device and the second electronic device through the first connecting part and the second connecting part, so as to transmit data from the first electronic device to the second electronic device, store the data from the first electronic device into the storage element of the data storage device, or both transmit the data from the first electronic device to the second electronic device and store the data from the first electronic device into the storage element of the data storage device.

In order to make the aforementioned and other objects, features and advantages of the present invention comprehensible, a preferred embodiment accompanied with figures is described in detail below.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.
FIG. 1 is a three-dimensional diagram of a data storage device according to an embodiment of the present invention.
FIG. 2 is a block diagram illustrating a data storage device of FIG. 1.
FIG. 3 is a three-dimensional diagram of a data storage device according to another embodiment of the present invention.

### DESCRIPTION OF EMBODIMENTS

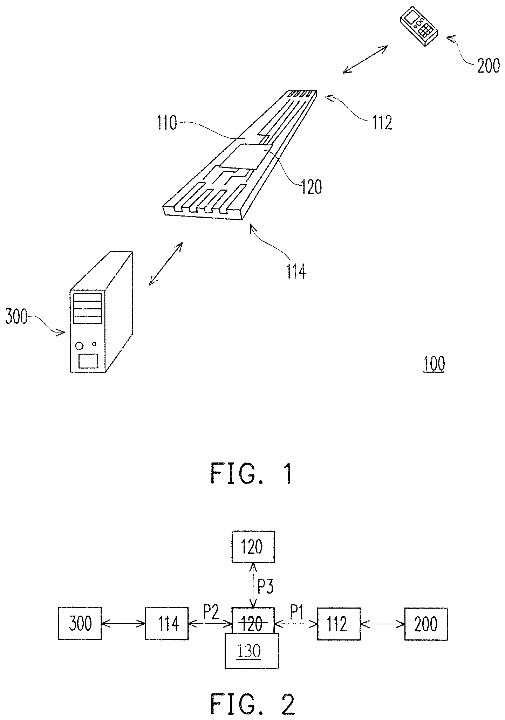

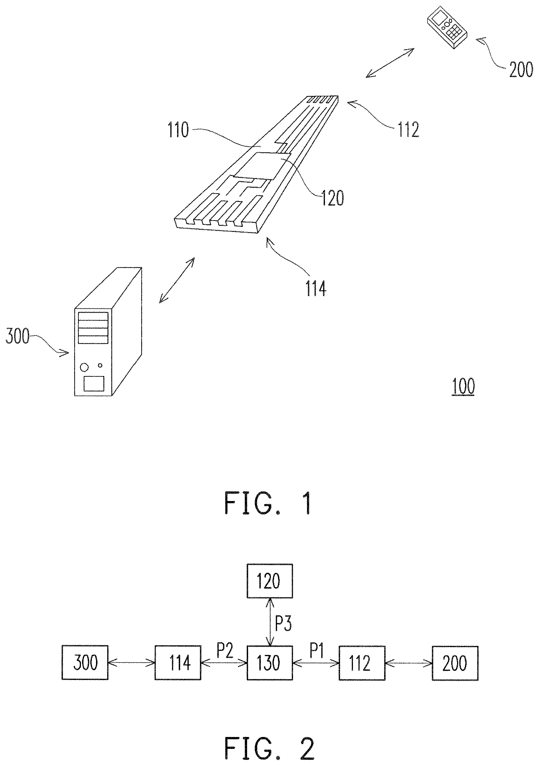

FIG. 1 is a three-dimensional diagram of a data storage device according to an embodiment of the present invention. Referring to FIG. 1, the data storage device 100 includes a main body 110 and a storage element 120. The main body 110 has a first connecting part 112 and a second connecting part 114 for respectively connecting a first electronic device 200 and a second electronic device 300. In the present embodiment, the first electronic device 200 and the second electronic device 300 are, for example, a mobile phone and a host of a personal computer or a laptop computer, respectively.

The storage element 120 is disposed at the main body 110, and is electrically connected to the first connecting part 112 and the second connecting part 114, wherein the data storage device 100 is suitable for receiving data from the first electronic device 200, and the data is selected for being stored into the storage element 120, being transmitted to the second electronic device 300, or being both stored into the storage element 120 and transmitted to the second electronic device 300.

In detail, the data storage device 100 can be connected to the first electronic device 200 or the second electronic device 300 for receiving data from the first electronic device 200 or the second electronic device 300. Moreover, the data storage device 100 can further be simultaneously connected to the first electronic device 200 and the second electronic device 300 for transmitting data from the first electronic device 200 to the second electronic device 300, or transmitting data from the second electronic device 300 to the first electronic device 200. Particularly, during the data transmission process, the data storage device 100 can simultaneously store data received form the first electronic device 200 or the second electronic device 300 to the storage element 120. In other words, the data storage device 100 has both a data transmission function and a data storage function, and can simultaneously perform the data transmission and the data storage operations, so that utilization thereof is more convenient and flexible.

The first connecting part 112 and the second connecting part 114 can be connecting terminals in different specifications. In the present embodiment, the first connecting part 112 and the second connecting part 114 are, for example, two of a universal serial bus (USB) interface, a mini universal serial buss (Mini-USB) interface and a micro universal serial buss (Micro-USB) interface, and are respectively used for connecting the first electronic device (the host of the personal computer or the laptop computer) 200 and the second electronic device (the mobile phone) 300.

FIG. 2 is a block diagram illustrating the data storage device of FIG. 1. Referring to FIG. 2, in the present embodiment, the data storage device 100 further includes a control device 130 disposed at the main body 110 (shown in FIG. 1), and electrically connected among the first connecting part 112, the second connecting part 114 and the storage element 120. The control device 130 controls to store the data into the storage element 120, or transmit the data from the first electronic device 200 to the second electronic device 300 (or from the second electronic device 300 to the first electronic device 200), or to store the data into the storage element 120 and transmit it from the first electronic device 200 to the second electronic device 300 (or from the second electronic device 300 to the first electronic device 200).

For example, if the user only wants to store the data into the storage element 120, when the data is transmitted from the first connecting part 112 to the control device 130 through a transmission path P1, the user controls the control device 130 to store the data into the storage element 120 through a transmission path P3, and block a transmission path P2. If the user only wants to use the data transmission function of the data storage device 100, when the data is transmitted from the first connecting part 112 to the control device 130 through the transmission path P1, the user controls the control device 130 to transmit the data to the second connecting part 114 through the transmission path P2, and further transmit the data to the second electronic device 300, and block the transmission path P3. The user can control operations of the control device 130 through a switch (not shown) on the main body 110 of the data storage device 100. Moreover, the user can also control the operations of the control device 130 through an operation interface of the first electronic device 200 or the second electronic device 300.

It should be noted that the aforementioned data transmission direction is only used for an example, and the data transmission direction is not limited by the present invention. The data can be transmitted from the first electronic device 200 to the second electronic device 300 sequentially through the first connecting part 112, the transmission path P1, the control device 130, the transmission path P2 and the second connecting part 114, or can be transmitted from the first electronic device 200 to the storage element 120 sequentially through the first connecting part 112, the transmission path P1, the control device 130 and the transmission path P3, or can be transmitted from the second electronic device 300 to the first electronic device 200 sequentially through the second connecting part 114, the transmission path P2, the control device 130, the transmission path P1 and the first connecting part 112, or can be transmitted from the second electronic device 300 to the storage element 120 sequentially through the second connecting part 114, the transmission path P2, the control device 130 and the transmission path P3.

Referring to FIG. 1, in the present embodiment, the main body 110 is, for example, a flat stick, and the first connecting part 112 and the second connecting part 114 are respectively a plurality of finger-shaped contacts disposed at two opposite ends of the flat stick. Moreover, the storage element 130 is, for example, a memory chip embedded in the main body 110. However, a shape of the main body 110 is not limited by the present application. FIG. 3 is a three-dimensional diagram of a data storage device according to another embodiment of the present invention. Referring to FIG. 3, in the present embodiment, the main body 110' is a transmission cable, and the first connecting part 112' and the second connecting part 114' are respectively two jacks disposed at two opposite ends of the transmission cable.

In summary, the data storage device of the present invention can be connected between the first electronic device and the second electronic device through the first connecting part and the second connecting part, so that the at least one of the functions including transmitting data between the first electronic device and the second electronic device, and storing data from the first electronic device or the second electronic device can be selectively performed. Moreover, the data storage device further includes a control device, so that the user can switch the control device to perform the aforementioned various data transmission or data storage functions.

## Claims

1. A data storage device (100), comprising:
a main body (110), having a first connecting part (112) and a second connecting part (114), for being separately or simultaneously connected to a first electronic device (200) and a second electronic device (300);
a storage element (120), disposed at the main body (110); and
a control device (130), disposed at the main body (110) and electrically connected among the first connecting part (112), the second connecting part (114) and the storage element (120) to receive data from the first electronic device (200), the data storage device (100) being **characterized in that**
the control device (130) being adapted to selectively store the data into the storage element (120) through a transmission path between the control device (130) and the storage element (120) and blocking a transmission path between the control device (130) and the second electronic device (300), or to transmit the data to the second electronic device (300) through the transmission path between the control device (130) and the second electronic device (300) and blocking the transmission path between the control device (130) and the storage element (120), or to store the data into the storage element (120) and transmit the data to the second electronic device (300) simultaneously through the a transmission path between the control device (130) and the storage element (120) and through the transmission path between the control device (130) and the second electronic device (300).

2. The data storage device (100) as claimed in claim 1, the first connecting part (112) and the second connecting part (114) are connecting terminals in different specifications.

3. The data storage device (100) as claimed in claim 1, further comprising a control device (130) disposed at the main body (110) and electrically connected among the first connecting part (112), the second connecting part (114) and the storage element (120), wherein the control device (130) controls to store the data into the storage element (120), or transmit the data to the second electronic device (300), or to store the data into the storage element (120) and transmit the data to the second electronic device (300).

4. The data storage device (100) as claimed in claim 1, wherein the main body (110) comprises a flat stick, and the first connecting part (112) and the second connecting part (114) are respectively a plurality of finger-shaped contacts disposed at two opposite ends of the flat stick.

5. The data storage device (100) as claimed in claim 1, wherein the main body (110) is a transmission cable, and the first connecting part (112) and the second connecting part (114) are respectively two jacks disposed at two opposite ends of the transmission cable.

6. The data storage device (100) as claimed in claim 1, wherein the storage element (120) is a memory chip embedded in the main body (110).

7. A method for operating a data storage device (100), the data storage device (100) comprising a main body (110) having a first connecting part (112) and a second connecting part (114) for being separately or simultaneously connected to a first electronic device (200) and a second electronic device (300), a storage element (120) disposed at the main body (110), and a control device (130) disposed at the main body (110) and electrically connected among the first connecting part (112), the second connecting part (114) and the storage element (120), the method comprising:
transmitting data from a first electronic device (200) to the control device (130); and being **characterized in** further comprising
selecting storing the data into the storage element (120) through a transmission path between the control device (130) and the storage element (120) and blocking a transmission path between the control device (130) and the second electronic device (300), or transmitting the data to the second electronic device (300) through the transmission path between the control device (130) and the second electronic device (300) and blocking the transmission path between the control device (130) and the storage element (120), or storing the data into the storage element (120) and transmitting the data to the second electronic device (300) simultaneously through the transmission path between the control device (130) and the storage element (120) and through the transmission path between the control device (130) and the second electronic device (300).

8. The method for operating a data storage device (100) as claimed in claim 7, wherein the data storage device (100) further comprises a control device (130), and the control device (130) controls to store the data into the storage element (120), or transmit the data to the second electronic device (300), or to store the data into the storage element (120) and transmit the data to the second electronic device (300).

9. The data storage device (100) as claimed in claim 1, further comprising a switch disposed on the main body (110) to control the operations of the control device (130).

10. The method for operating a data storage device (100) as claimed in claim 8, wherein the operation of the control device (130) is controlled by a user through a switch on the main body (110) of the data storage device (100).

## Patentansprüche

1. Datenspeichervorrichtung (100), umfassend:
ein Hauptkörper (110) mit einem ersten Verbindungsteil (112) und einem zweiten Verbindungsteil (114), um separat oder gleichzeitig mit einer ersten elektronischen Vorrichtung (200) und einer zweiten elektronischen Vorrichtung (300) verbunden zu werden;
ein Speicherelement (120), das am Hauptkörper (110) angeordnet ist; und
eine Steuervorrichtung (130), die am Hauptkörper (110) angeordnet und elektrisch zwischen dem ersten Verbindungsteil (112), dem zweiten Verbindungsteil (114) und dem Speicherelement (120) verbunden ist, um Daten von der ersten elektronischen Vorrichtung (200) zu empfangen, wobei die Datenspeichervorrichtung (100) **dadurch gekennzeichnet ist, dass**
die Steuervorrichtung (130) angepasst ist zum wahlweise Speichern der Daten in das Speicherelement (120) durch eine Übertragungsstrecke zwischen der Steuervorrichtung (130) und dem Speicherelement (120) und Blockieren einer Übertragungsstrecke zwischen der Steuervorrichtung (130) und der zweiten elektronischen Vorrichtung (300) oder zum Übertragen der Daten an die zweite elektronische Vorrichtung (300) durch die Übertragungsstrecke zwischen der Steuervorrichtung (130) und der zweiten elektronischen Vorrichtung (300) und Blockieren der Übertragungsstrecke zwischen der Steuervorrichtung (130) und dem Speicherelement (120) oder zum Speichern der Daten in das Speicherelement (120) und Übertragen der Daten an die zweite elektronische Vorrichtung (300) gleichzeitig durch die Übertragungsstrecke zwischen der Steuervorrichtung (130) und dem Speicherelement (120) und durch die Übertragungsstrecke zwischen der Steuervorrichtung (130) und der zweiten elektronischen Vorrichtung (300).

2. Datenspeichervorrichtung (100) gemäß Anspruch 1, wobei das erste Verbindungsteil (112) und das zweite Verbindungsteil (114) Verbindungsanschlüsse mit verschiedenen Spezifikationen sind.

3. Datenspeichervorrichtung (100) gemäß Anspruch 1, weiterhin umfassend eine Steuervorrichtung (130), die am Hauptkörper (110) angeordnet und elektrisch zwischen dem ersten Verbindungsteil (112), dem zweiten Verbindungsteil (114) und dem Speicherelement (120) verbunden ist, wobei die Steuervorrichtung (130) steuert die Daten in das Speicherelement (120) zu speichern, oder die Daten an die zweite elektronische Vorrichtung (300) zu übertragen oder die Daten in das Speicherelement (120) zu speichern und die Daten an die zweite elektronische Vorrichtung (300) zu übertragen.

4. Datenspeichervorrichtung (100) gemäß Anspruch 1, wobei der Hauptkörper (110) einen flachen Stab umfasst und das erste Verbindungsteil (112) und das zweite Verbindungsteil (114) jeweils eine Vielzahl von fingerförmigen Kontakten sind, die an zwei gegenüberliegenden Enden des flachen Stabs angeordnet sind.

5. Datenspeichervorrichtung (100) gemäß Anspruch 1, wobei der Hauptkörper (110) ein Übertragungskabel ist, und das erste Verbindungsteil (112) und das zweite Verbindungsteil (114) jeweils zwei Buchsen sind, die an zwei gegenüberliegenden Enden des Übertragungskabels angeordnet sind.

6. Datenspeichervorrichtung (100) gemäß Anspruch 1, wobei das Speicherelement (120) ein Speicherchip ist, der in dem Hauptkörper (110) eingebettet ist.

7. Verfahren zum Betrieb einer Datenspeichervorrichtung (100), wobei die Datenspeichervorrichtung (100) umfasst einen Hauptkörper (110) mit einem ersten Verbindungsteil (112) und einem zweiten Verbindungsteil (114), um separat oder gleichzeitig mit einer ersten elektronischen Vorrichtung (200) und einer zweiten elektronischen Vorrichtung (300) verbunden zu werden, ein Speicherelement (120), das am Hauptkörper (110) angeordnet ist, und eine Steuervorrichtung (130), die am Hauptkörper (110) angeordnet ist und elektrisch zwischen dem ersten Verbindungsteil (112), dem zweiten Verbindungsteil (114) und dem Speicherelement (120) verbunden ist, wobei das Verfahren umfasst:
Übertragen von Daten von einer ersten elektronischen Vorrichtung (200) an die Steuervorrichtung (130); und weiterhin **gekennzeichnet durch**
Auswählen von Speichern der Daten in das Speicherelement (120) durch eine Übertragungsstrecke zwischen der Steuervorrichtung (130) und dem Speicherelement (120) und Blockieren einer Übertragungsstrecke zwischen der Steuervorrichtung (130) und der zweiten elektronischen Vorrichtung (300), oder Übertragen der Daten an die zweite elektronische Vorrichtung (300) durch die Übertragungsstrecke zwischen der Steuervorrichtung (130) und der zweiten elektronischen Vorrichtung (300) und Blockieren der Übertragungsstrecke zwischen der Steuervorrichtung (130) und dem Speicherelement (120), oder Speichern der Daten in das Speicherelement (120) und Übertragen der Daten an die zweiten elektronischen Vorrichtung (300) gleichzeitig durch die Übertragungsstrecke zwischen der Steuervorrichtung (130) und dem Speicherelement (120) und durch die Übertragungsstrecke zwischen der Steuervorrichtung (130) und der zweiten elektronischen Vorrichtung (300).

8. Verfahren zum Betrieb einer Datenspeichervorrichtung (100) gemäß Anspruch 7, wobei die Datenspeichervorrichtung (100) weiterhin eine Steuervorrichtung (130) umfasst und die Steuervorrichtung (130) steuert die Daten in das Speicherelement (120) zu speichern, oder die Daten an die zweite elektronische Vorrichtung (300) zu übertragen oder die Daten in das Speicherelement (120) zu speichern und die Daten an die zweite elektronische Vorrichtung (300) zu übertragen.

9. Die Datenspeichervorrichtung (100) gemäß Anspruch 1, weiterhin umfassend einen Schalter, der an dem Hauptkörper (110) angeordnet ist, um den Betrieb der Steuervorrichtung (130) zu steuern.

10. Verfahren um Betrieb einer Datenspeichervorrichtung (100) gemäß Anspruch 8, wobei der Betrieb der Steuervorrichtung (130) durch einen Benutzer über einen Schalter an dem Hauptkörper (110) der Datenspeichervorrichtung (100) gesteuert wird.

## Revendications

1. Dispositif de stockage de données (100), comprenant :
un corps principal (110), ayant une première partie de connexion (112) et une seconde partie de connexion (114), pour être connectés séparément ou simultanément à un premier dispositif électronique (200) et un second dispositif électronique (300),
un élément de stockage (120), disposé au niveau du corps principal (110),
un dispositif de commande (130), disposé au niveau du corps principal (110) et connecté électriquement parmi la première partie de connexion (112), la seconde partie de connexion (114) et l'élément de stockage (120) pour recevoir des données provenant du premier dispositif électronique (200), le dispositif de stockage de données (100) étant **caractérisé en ce que**
le dispositif de commande (130) étant adapté pour stocker sélectivement les données dans l'élément de stockage (120) par l'intermédiaire d'un trajet de transmission entre le dispositif de commande (130) et l'élément de stockage (120) et bloquer un trajet de transmission entre le dispositif de commande (130) et le second dispositif électronique (300), ou transmettre les données au second dispositif électronique (300) par l'intermédiaire du trajet de transmission entre le dispositif de commande (130) et le second dispositif électronique (300) et bloquer le trajet de transmission entre le dispositif de commande (130) et l'élément de stockage (120), ou stocker les données dans l'élément de stockage (120) et transmettre les données au second dispositif électronique (300) simultanément par l'intermédiaire d'un trajet de transmission entre le dispositif de commande (130) et l'élément de stockage (120) et par l'intermédiaire du trajet de transmission entre le dispositif de commande (130) et le second dispositif électronique (300).

2. Dispositif de stockage de données (100) selon la revendication 1, la première partie de connexion (112) et la seconde partie de connexion (114) sont des bornes de connexion dans des spécifications différentes.

3. Dispositif de stockage de données (100) selon la revendication 1, comprenant en outre un dispositif de commande (130) disposé au niveau du corps principal (110) et connecté électriquement parmi la première partie de connexion (112), la seconde partie de connexion (114) et l'élément de stockage (120), dans lequel le dispositif de commande (130) commande afin de stocker les données dans l'élément de stockage (120), ou transmettre les données au second dispositif électronique (300) ou stocker les données dans l'élément de stockage (120) et transmettre les données au second dispositif électronique (300).

4. Dispositif de stockage de données (100) selon la revendication 1, dans lequel le corps principal (110) comprend un bâtonnet plat et la première partie de connexion (112) et la seconde partie de connexion (114) sont respectivement une pluralité de contacts en forme de doigts disposés aux deux extrémités opposées du bâtonnet plat.

5. Dispositif de stockage de données (100) selon la revendication 1, dans lequel le corps principal (110) est un câble de transmission, et la première partie de connexion (112) et la seconde partie de connexion (114) sont respectivement deux jacks disposés aux deux extrémités opposées du câble de transmission.

6. Dispositif de stockage de données (100) selon la revendication 1, dans lequel l'élément de stockage (120) est une puce de mémoire incorporée dans le corps principal (110).

7. Procédé de fonctionnement d'un dispositif de stockage de données (100), le dispositif de stockage de données (100) comprenant un corps principal (110), ayant une première partie de connexion (112) et une seconde partie de connexion (114), pour être connectés séparément ou simultanément à un premier dispositif électronique (200) et un second dispositif électronique (300), un élément de stockage (120), disposé au niveau du corps principal (110), un dispositif de commande (130), disposé au niveau du corps principal (110) et connecté électriquement parmi la première partie de connexion (112), la seconde partie de connexion (114) et l'élément de stockage (120), le procédé comprenant de :
transmettre les données depuis un premier dispositif électronique (200) au dispositif de commande (130) ;
et étant **caractérisé en ce qu'**il comprend en outre de :
stocker sélectivement les données dans l'élément de stockage (120) par l'intermédiaire d'un trajet de transmission entre le dispositif de commande (130) et l'élément de stockage (120) et bloquer un trajet de transmission entre le dispositif de commande (130) et le second dispositif électronique (300), ou transmettre les données au second dispositif électronique (300) par l'intermédiaire du trajet de transmission entre le dispositif de commande (130) et le second dispositif électronique (300) et bloquer le trajet de transmission entre le dispositif de commande (130) et l'élément de stockage (120), ou stocker les données dans l'élément de stockage (120) et transmettre les données au second dispositif électronique (300) simultanément par l'intermédiaire d'un trajet de transmission entre le dispositif de commande (130) et l'élément de stockage (120) et par l'intermédiaire du trajet de transmission entre le dispositif de commande (130) et le second dispositif électronique (300).

8. Procédé de fonctionnement d'un dispositif de stockage de données (100) selon la revendication 7, dans lequel le dispositif de stockage de données (100) comprend en outre un dispositif de commande (130)et le dispositif de commande (130) commande afin de stocker les données dans l'élément de stockage (120), ou transmettre les données au second dispositif électronique (300) ou stocker les données dans l'élément de stockage (120) et transmettre les données au second dispositif électronique (300).

9. Procédé de fonctionnement d'un dispositif de stockage de données (100) selon la revendication 1, comprenant en outre un interrupteur disposé sur le corps principal (110) pour commander les opérations du dispositif de commande (130).

10. Procédé de fonctionnement d'un dispositif de stockage de données (100) selon la revendication 8, dans lequel le fonctionnement du dispositif de commande (130) est commandé par un utilisateur par l'intermédiaire d'un interrupteur sur le corps principal (110) du dispositif de stockage de données (100).
